# EUROPEAN PATENT APPLICATION

(11) **EP 2 527 816 A1**
(43) Date of publication of application: **28.11.2012**
(21) Application number: 12167068.1
(22) Date of filing: 08.05.2012
(51) Int. Cl.: G01N 21/25, G01N 21/35

(54) **Quaternary photodetector for downhole optical sensing**

(30) Priority: 23.05.2011 US 201113113359
(71) Applicant: Precision Energy Services, Inc., Fort Worth, TX 76126 (US)
(72) Inventor: Ford, Jess V., Weatherford, TX 76088 (US); Kasperski, Bryan, Carrollton, TX 75010 (US); Christian, Sean M., Land O Lakes, FL 34638 (US); Haslett, Tom, Toronto, Ontario M4M 3C6 (CA); Demmer, Dave, Toronto, Ontario M4L 3C9 (CA); Dallas, Joseph, Maple Glen, PA 19002 (US); Winick, Dave, Freehold, NJ 07728 (US)
(74) Representative: Gee, Steven William

(57) **Abstract**

Detector assembly for downhole spectroscopy includes a near-infra-red quaternary photodiode that can operate at high temperatures without cooling it to the standard operation temperature range of the photodiode. High temperature operation of the photodiode right shifts the detector assembly's responsivity curve to include wavelengths of up to 2400-nm. The photodiode has manageable dark current at temperatures even at 200°C, and it can be packaged using high temperature construction. The photodiode is operated in photovoltaic mode at high temperatures but can be operated at photoconductive mode at lower temperatures. At least partial cooling can be provided above a predetermined temperature.

## Description

### BACKGROUND

Various types of photodetectors are known and used in the art. Of these, some materials, such as germanium (Ge), Indium-gallium-arsenide (InGaAs), indium-antimony (InSb), etc., can be used for near-infra red (NIR) photodetectors. An example of an NIR photodetector is the PD-24 photodiode manufactured by IBSG Co. Ltd.

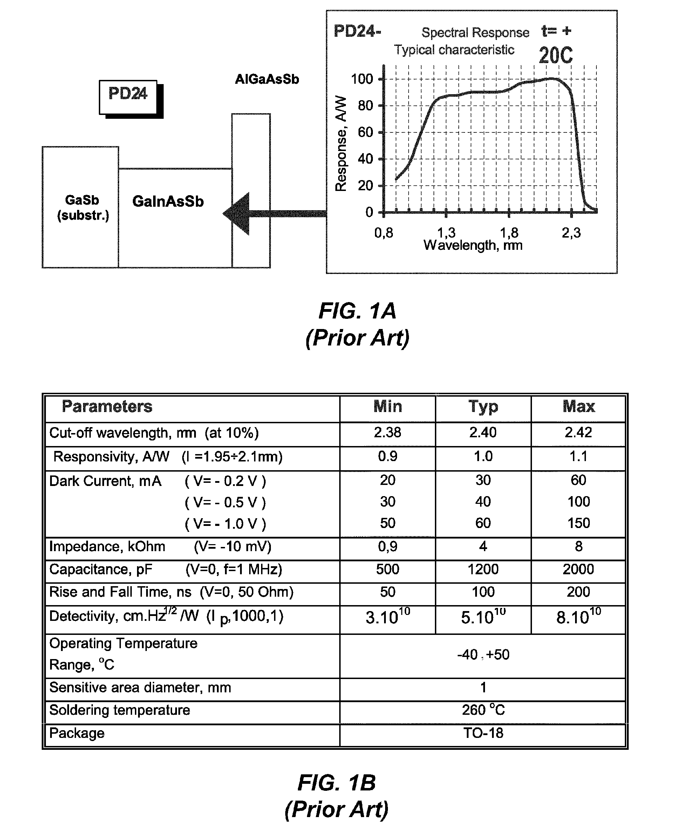

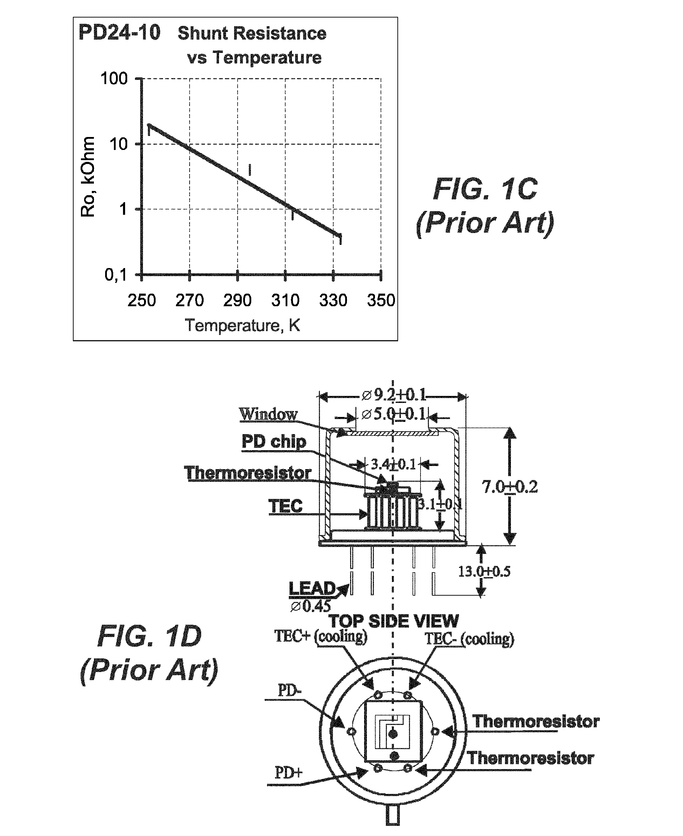

As shown in Fig. 1A, the PD-24 photodiode uses an AlGaAsSb quaternary material as the window and uses an InGaAsSb active layer grown on a GaSb substrate. As also shown in FIG. 1A, the responsivity of the PD-24 photodiode at 20 °C covers the wavelength range from approximately 900 nm to 2400 nm. However, the responsivity at 2400 nm drops off considerably and becomes negligible. It is notable that the PD-24 photodiode is rated for operation within the temperature range of only -40 to 50°C (FIG. 1 B). As evident from FIG. 1C, shunt resistance of the PD-24 photodiode decreases with an increase in temperature. Because small shunt resistance is a major source of noise, operation of the PD-24 photodiode at high temperatures may result in degraded signal-to-noise ratios.

Due to these operating parameters, the PD-24 photodiode is typically cooled to maintain its temperature to within recommended operational temperatures. For example, the PD24-TEC package shown in FIG. 1D includes thermoelectric cooling (TEC). Cooling can improve the signal-to-noise ratio of the PD-24 photodiode by bringing the PD-24 photodiode into its operating temperature range (-40 to 50°C).

Various types of sensors are used in downhole tools to test the formation, analyze fluids, and perform other operations. Because the downhole environment can involve high temperatures, harsh chemicals, vibrations, and other extreme conditions, the downhole tool and sensors must be designed to handle problems resulting from such conditions. In some cases, any sensitive electronics must be independently cooled to be able to operate in the high downhole temperatures. Added to all of these difficulties, the downhole environment has limited space into which the downhole tool and sensors must fit.

In some implementations, NIR photodetectors are used in a downhole tool to measure optical absorption spectra or other optical characteristics of downhole fluids. For example, NIR photodetectors can be used in spectrometers to identify downhole fluid (e.g., oil, water, and gas phase), to quantify filtrate contamination, and to determine hydrocarbon composition (e.g., amount of methane, ethane, propane) and the gas-to-oil ratio (GOR).

Using NIR photodetectors downhole can be problematic because the NIR photodetectors can experience elevated dark currents due to the high thermal conditions in the downhole environment. The rated operational temperatures for NIR photodetectors is typically far lower than temperatures of above 125°C experienced during downhole operation. As is known, cooling photodetectors downhole can be considerably complicated because the downhole tool has a limited power budget that makes any current/power used for cooling problematic. For these reasons, what is needed is a NIR photodetector that can deal with these problems without requiring significant complexity and cooling.

### BRIEF DESCRIPTION OF THE DRAWINGS

FIGS. 1A-1D reproduced properties from a datasheet for a PD-24 photodetector known in the art.

FIG. 2 illustrates a downhole tool deployed in a borehole.

FIG. 3A illustrate an example of a downhole fluid analysis device for use in the downhole tool of FIG. 2.

FIG. 3B illustrates a near infra-red photodiode for the device of FIG. 3A.

FIG. 3C is a flowchart of a process for determining the fluid properties in a downhole environment using the device of FIG. 3A and the photodiode of FIG. 3B.

FIG. 3D shows an amplified photodiode output for an incident square wave signal of a modulation frequency from a source.

FIG. 4 illustrates a test setup for analyzing high temperature properties of photodiode of FIG. 3B.

FIG. 5 shows responsivity curves for the photodiode of FIG. 3B for various ambient temperatures.

FIGS. 6A and 6B show schematics of photovoltaic and photoconductive modes of operation of photodiode of FIG. 3B.

FIGS. 7A and 7B illustrate photodiode signal and dark current for various values of reverse bias voltage at room temperature.

FIGS. 8A and 8B show exemplary plots of shunt resistance and dark current with respect to change in temperature.

FIGS. 9A and 9B illustrate signal amplitude and dark current at various temperatures for modulation frequencies.

FIG. 10 illustrates a Fast Fourier Transform (FFT) analysis of the photodiode signal.

FIG. 11 shows exemplary plots of photodiode signals for two photodiodes at three separate wavelengths and two different modulation frequencies plotted with respect to temperature.

FIGS. 12A and 12B show accumulated plots of FIG. 11.

FIG. 13 shows testing of material stability of photodiode of FIG. 3B.

### SUMMARY

A downhole tool includes a measurement device for *in-situ* sampling and analysis of fluids in a wellbore. The measurement device includes at least one spectral source of light for interacting with a sample of downhole fluid and includes at least one detector for detecting the spectral source of light after interaction with the fluid.

The photodetector can have a near infra-red photodiode for measuring incident light in the near infra-red region. The NIR photodetector is operated in the high temperature downhole environment without cooling to the standard operating temperature of the photo detector. The photodetector may include a photodiode having a quaternary material of AlGaAsSb, which meets the requirements for downhole implementation based almost solely on the properties of the quaternary material itself.

Analysis of high temperature properties of quaternary photodiodes shows that the responsivity curve for the detector red-shifts, i.e., shifts towards longer wavelengths, with increase in temperature. This advantageously provides detection of spectral sources at and above 2400-nm. At lower temperatures, the detector can be operated in photoconductive mode since the shunt resistance is high enough to maintain low dark current with an applied reverse bias. At elevated temperatures, the detector performance is improved by operating in photovoltaic mode (with no reverse bias) to reduce dark currents. In both photovoltaic and photoconductive mode, the detector is connected to a standard trans-impedance amplifier circuit.

The magnitude of the signal generated by the photodiode reduces with increasing temperature. At the same time, the magnitude of noise voltage at the output of the trans-impedance amplifier increases with the increasing temperature due to the shunt resistance dropping with increasing temperature. The photodiode's signal is independent of the wavelength and modulation frequency of the incident light so long as the gain bandwidth of the transimpediance amplifier circuit is sufficient. At constant temperature, the photodiode's signal is also constant across various samples of the same material. Responsivity generally decreases with increase in temperature. For example, at 200°C the responsivity is approximately 30% of the responsivity at 100°C.

The photodiode exhibits stable operation when exposed to long periods of high temperature. The measurement device can be adapted to provide cooling for downhole temperatures exceeding a predetermined value. For example, cooling can be activated for temperatures exceeding 125°C.

### DETAILED DESCRIPTION

### A. Downhole Tool

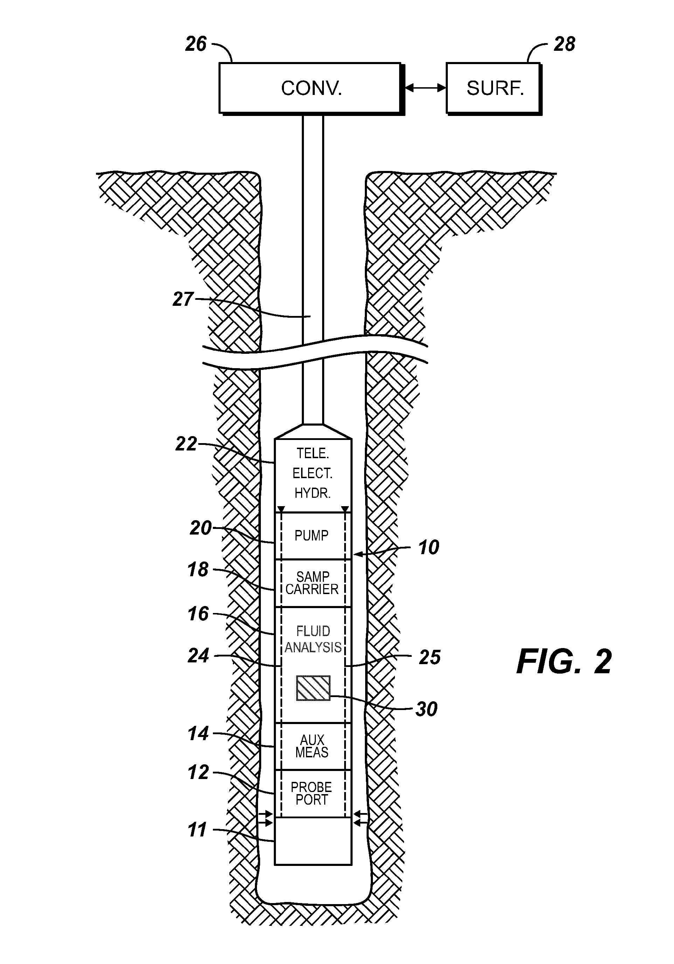

A downhole tool 10 in Fig. 2 has a measurement device 30 for in-situ sampling and analysis of fluids in a wellbore. A conveyance apparatus 26 at the surface deploys the tool 10 downhole using a tubular, a cable, a wireline, or similar component 27. As shown in Fig. 2, the tool 10 can be a formation tester such as disclosed in U.S. Pat. 7,805,988, which is incorporated herein by reference. However, the measurement device 30 can be deployed in any suitable tool used for wireline formation testing, production logging, Logging While Drilling/Measurement While Drilling (LWD/MWD), or other operations.

As shown in Fig. 2, the formation tester tool 10 has one or more fluid flow lines 24/25 that extend through sections of the tool 10 and that are functionally configurable. In operation, a probe 12 having an intake port draws fluid into the tool 10. To isolate the formation fluid samples from contaminates in the annulus, the tool 10 can use isolation elements, such as packers 11 or other devices, to isolate a region of the formation.

A pump 20 then pumps collected fluid from the probe 12 into the tool 10 via the flow lines 24/25. The fluid, which can contain hydrocarbon components (liquid and/or gas) as well as drilling mud filtrate or other contaminants, flows through the tool 10, and various instruments and sensors in the tool 10 analyze the fluid. For example, a measurement section 14 can have sensors that measure various physical parameters (i.e., pressure, temperature, etc.) of the fluid, and the measurement device 30 in the fluid analysis section 16 can determine physical and chemical properties of oil, water, and gas constituents of the fluid downhole. Eventually, fluid directed via the flow lines 24/25 can either be purged to the annulus or can be directed to the sample carrier 18 where the samples can be retained for additional analysis at the surface.

Additional components 22 of the tool 10 can hydraulically operate valves and other elements within the tool 10, can provide control and power to various electronics, and can communicate data via wireline or fluid telemetry to the surface. Uphole, surface equipment 28 can have a surface telemetry unit (not shown) to communicate with the downhole tool's telemetry components. The surface equipment 28 can also have a surface processor (not shown) that performs additional processing of the data measured by the tool 10.

As noted above, the fluid analysis section 16 uses the measurement device 30 for downhole fluid analysis. Depending on the configuration and types of sources and photodetectors used and their orientation relative to a sample, the measurement device 30 can operate as a photometric analyzer, reflectometer, spectroscope, spectrophotometer, spectrometer, fluorimeter, or the like. For example, the measurement device 30 can operate as a multi-channel photometric analyzer in which discrete wavelengths are interrogated over a given measurement range. In common oil field usage, such a multi-channel photometric analyzer can be referred to as a spectrometer. Thus, the measurement device 30 can use various discrete spectral channels to perform spectroscopic analysis of downhole fluid passing relative to it as the fluid is pumped through the tool 10.

As such, the spectroscopic analysis discussed herein can include, but may not be limited to, analysis of transmission, absorbance, fluorescence, or reflectance spectra, upon which chemometrics, derivative spectroscopy, and other techniques known in the art can be applied.

Although shown used in the formation tester tool 10, the measurement device 30 can be deployed in any suitable tool used for wireline formation testing, production logging, Logging While Drilling/Measurement While Drilling (LWD/MWD), or other operations. Therefore, the downhole tool 10 can be a wireline formation tester, a drilling formation tester, a production logging tool, or other temporary, permanent, or semi-permanent tool to take fluids from the borehole.

### B. Measurement Device For Downhole Tool

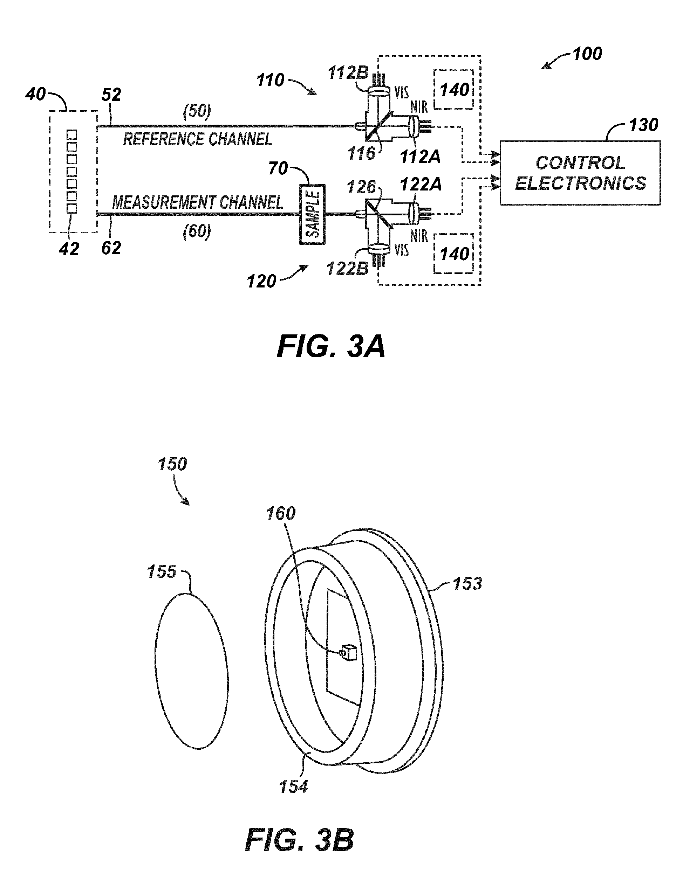

As schematically shown in Fig. 3A, one implementation of the measurement device 30 can have a source assembly 40, a sample interface assembly 70, and a detector assembly 100. The source assembly 40 can have one or more spectral sources 42, which can include broadband sources (e.g., tungsten halogen lamp, deuterium light source, xenon light source, coiled filament IR emitter, arc lamp, metal halide lamp, etc.) and solid state electronic sources (e.g., light emitting diode (LED), super-luminescent light emitting diode (SLED), laser diode (LD), etc.).

When operated, the source assembly 40 generates spectral signals partitioned into two channels-a reference channel 50 and a measurement channel 60. The reference channel 50 travels directly to the detector assembly 100. The measurement channel 60, however, interacts with a sample fluid via the sample assembly 70 and then travels to the detector assembly 100. In turn, the detector assembly 100 includes a reference detector unit 110 for the reference channel 50, a measurement detector unit 120 for the measurement channel, and control circuitry 130 coupled to these units 110/120.

Each detector unit 110/120 has dual photodetector 112A-B/122A-B for detecting two beams or bands of spectral energy from their respective channels 50/60. For example, first photodetector 112A/122A can include photodiodes capable of sensing in the near infra-red (NIR) spectrum, while second photodetector 112B/122B can be photodiodes capable of sensing in the ultraviolet (UV)/visible (Vis) spectral ranges, although other spectral ranges could be used. In combination, each dual band detector unit 110/120 can detect a wavelength range of about 350 to about 2400-nm, for example.

Inside each unit 110/120, a high pass beam splitter 116/126 splits the incoming channel (50/60) into a first (NIR) band and a second (UV-Vis) band by reflecting all wavelengths shorter than a cutoff wavelength and by passing all longer wavelengths. The cutoff wavelength of the splitter 116/126 can be between 800 and 1200-nm.

Once the channels (50/60) are split into bands, the first (NIR) photodetectors 112A/122A detect the first isolated bands passing through the splitters 116/126. These first (NIR) photodetectors 112A/122A can include quaternary photodiodes used for sensing the NIR wavelength range, for example. For their part, the second (VIS) photodetectors 112B/122B detect the second isolated bands from the splitters 116/126. These second (VIS) photodetectors 112B/122B can be silicon-based photodiodes used for sensing the visible and/or ultraviolet wavelength range, for example.

After detection, the control circuitry 130 coupled to each of the photodetectors 112A-B/122A-B interrogates the photodetectors' responses for processing and analysis. Additional details regarding the detector assembly 100 and its operation can be found in US Patent Application Serial No. 12/613,808, filed on November 6, 2009, entitled "Multi-channel Detector Assembly for Downhole Spectroscopy;" which is incorporated herein by reference in its entirety.

As noted above, the optical photodetectors 112A/122A can use NIR photodiodes composed of a quaternary material. In FIG. 3B, a downhole compatible photodetector 150 has a quaternary photodiode die 160, a header 153, a cap 154, and optically transparent window 155. The photodiode die 160 can have a 0.5 mm diameter and can use a quaternary material composed of aluminum (Al), gallium (Ga), arsenic (As), and antimony (Sb). In fact, the photodiode die 160 can be composed of the known PD-24 material discussed in the Background Section of the present disclosure. As such, the photodiode die 160 (of the photodetectors 112A/122A) can include a layer having a quaternary material composed of aluminum (Al), gallium (Ga), Arsenide (As), and Antimonide (Sb); a substrate composed of gallium (Ga) and Antimonide (Sb); and an active layer disposed between the window and the substrate and composed of gallium (Ga), Indium (In), Arsenide (As), and Antimonide (Sb).

The header 153 can preferentially be a TO-18 type of header, although any other standard TO package available commercially or a custom designed package could be used. High temperature solder or conductive epoxy can be used to affix the photodiode die 160 to the header 153. The cap 154 attaches to the header 153, and the optically transparent window 155 attaches to the cap 154. In all, the packaging of the photodiode die 160 in the photodetector 150 can be designed for high temperature operation. Likewise, any electronic components (i.e., resistors, op-amps, etc.) associated with the photodetector 150 preferably have very high precision or tolerance values.

Contrary to the standard practices in the art and the standard temperature ratings for such a quaternary photodiode, the photodiode die 160 of the NIR photodetector 150 of Fig. 3B can actually be used and operated at high temperatures experienced downhole without requiring signification cooling. In fact, it has been found that the photodiode die 160 can acceptably meet the requirements for downhole implementation based almost solely on the properties of the material itself, despite the standard practices associated with such a quaternary photodiode.

### 1. Device Without Cooling

In one embodiment of the detector assembly 100 of FIG. 3A, the detector assembly 100 can lack cooling of the photodiode die 160 when operated at high temperatures encountered in a downhole environment. In this arrangement, the photodiode dies 160 of the photodetectors 112A/122A can acceptably meet the requirements for downhole implementation based almost solely on the properties of the material itself. As will be discussed below, even without cooling, the quaternary photodiode die 160 can operate at high temperatures experienced downhole that are above the standard operating temperatures for the quaternary material of the photodiode die 160. As noted in the Background Section, the quaternary photodetector PD-24 has a standard operating temperature range of -40 to 50°C. In the current embodiment of the assembly 100, the disclosed photodiode die 160 can experience temperatures in the downhole environment above 100°C and even as high as 200°C. Thus, the disclosed photodiode die 160 used in the device 30 is operated at temperatures that are 50°C to 150 °C higher than the commercial PD-24's highest rated temperature (50°C) in its standard operating temperature range. This is done without cooling the photodiode die 160.

### 2. Device With Cooling

In another embodiment of the detector assembly 100 of FIG. 3A, the detector assembly 100 can include a cooling apparatus 140 (shown in dotted line in FIG. 3A) for cooling the photodiode die (160) of the photodetectors 112A/122A. This cooling can be triggered only when the temperature of the photodetector (150) exceeds a predetermined temperature. For example, control electronics 130 can monitor the temperature of photodetector (150) using the output of a temperature sensor (not shown), such as a thermoresistor or a resistance temperature detector (RTD) associated or proximate to the NIR photodetectors 112A/122A. If the temperature exceeds a predetermined temperature, the control electronics 130 can turn on the cooling apparatus 140.

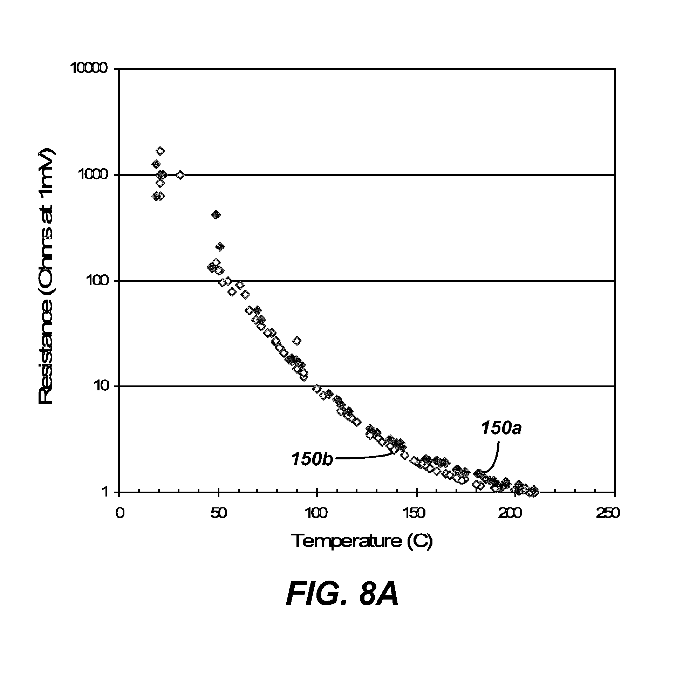

The selection of the predetermined temperature can be based on the magnitude of noise that can be tolerated during downhole operation at elevated temperatures. As discussed below, for example, FIG. 8A shows that the shunt resistance Rₛₕ of the photodiode die (160) decreases to very low values above 125 °C. Therefore, the cooling apparatus 140 can be programmed to kick-in only when the temperature of the photodetector (150) goes above 125°C.

Due to the complexities of cooling in a downhole environment associated with packaging, power supply, etc..., the cooling apparatus 140 is preferably designed to cool the photodiode die (160) by a preset amount of temperature. For example, the cooling apparatus 140 may cool the photodiode die (160) by 25°C below a current operating temperature. Therefore, if the operating temperature detected by the device 100 is currently 150°C, the cooling apparatus 140 is activated to reduce the temperature of the photodiode die (160) by about 25°C to about 125°C.

The cooling apparatus 140 can be a thermal electric cooler (TEC), although other forms of cooling can be used. For example, the cooling apparatus 140 can use sorptive cooling, thermo-tunneling, evaporators, Dewar, etc. As a TEC, the apparatus 140 can use BiTe-based Peltier elements, which require a high temperature solder be used to assemble the Peltier to avoid reflow at operational temperatures. An appropriate solder would be 80/20 AuSn, which reflows at about 280°C. The ceramics forming the top and bottom plates of the TEC for the apparatus 140 may be typically alumina or aluminum nitride. The electrical connections are preferably made using wirebonding to avoid lower temperature solders, but solders such as Sn-3.5%Ag (reflow 221 °C) may be used with the understanding that operational temperatures may be close to reflow temperature so that such lower temperature solders are less desirable.

### 3. Operation of Device

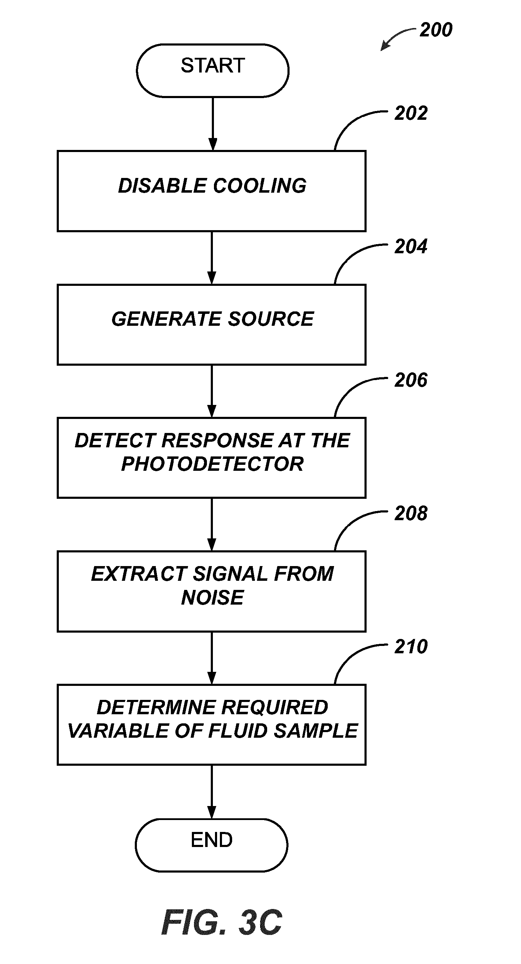

FIG. 3C depicts a flowchart of an exemplary process 200 for determining the fluid properties in a downhole environment using the photodetector 150. For example, photodetector 150 can be the photodetectors 112A/122A in the measurement device 30 in FIG. 3A. In step 202, cooling for the photodiode 112A/122A is disabled. Disabling cooling may include disabling the power supply to cooling apparatus such as 140 in FIG. 3A. Alternatively, disabling may include completely removing (or not including) cooling apparatus 140 from the measurement device 30 (Fig. 2). Furthermore, the cooling apparatus 140 can be programmed to be turned on only above a predetermined temperature as noted above.

In the next step 204, a light source, such as one or more spectral sources 42, can be activated to generate spectral signals across a spectral range. For the reference channel 50, the generated spectral signal images onto the photodiode die (160) of the NIR photodetector 112A. For the measurement channel 60, the generated spectral signal first interfaces with the sample in the interface 70 and then images onto the photodiode die (160) of the NIR photodetector 122A (FIGS. 3A). The light source's output is typically modulated as a square wave with 50% duty cycle and frequency in the range of 1000 - 1999 Hz preferably. However, other modulation schemes and frequencies can be utilized depending on the electronic amplification circuitry employed. In step 206, response of the photodiode die (160) of the photodetectors 112A/122A can be amplified and either immediately analyzed or stored in memory (not shown) to be analyzed later. The amplifier can be any suitable amplifier designed for a current source, such as a trans-impedance amplifier, for example.

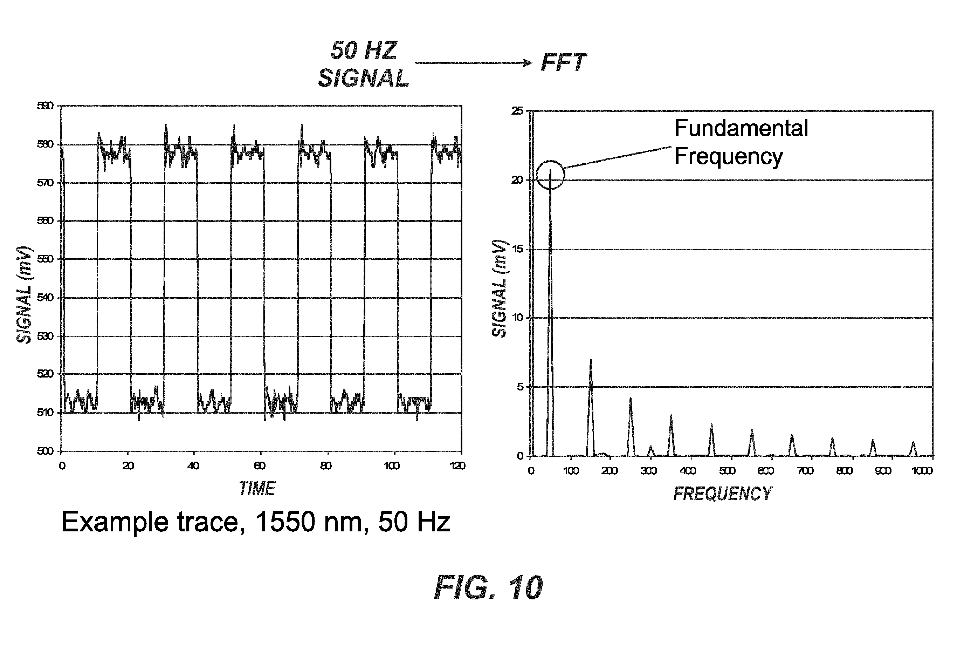

Once the amplified output of the photodetector 112A/122A is collected, the process 200 extracts the signal, which represents the actual response to the incident light, from the dark current and thermal noise. As discussed below with respect to FIGS. 10-12, the measurement device (30; Fig. 3A) can use a Fast Fourier Transform (FFT) analysis to determine the frequency components of the amplified output of the photodiode 112A/122A and can use the magnitude of these frequency components to represent the optical signal response. Other forms of analysis could be performed to extract the fundamental frequency component.

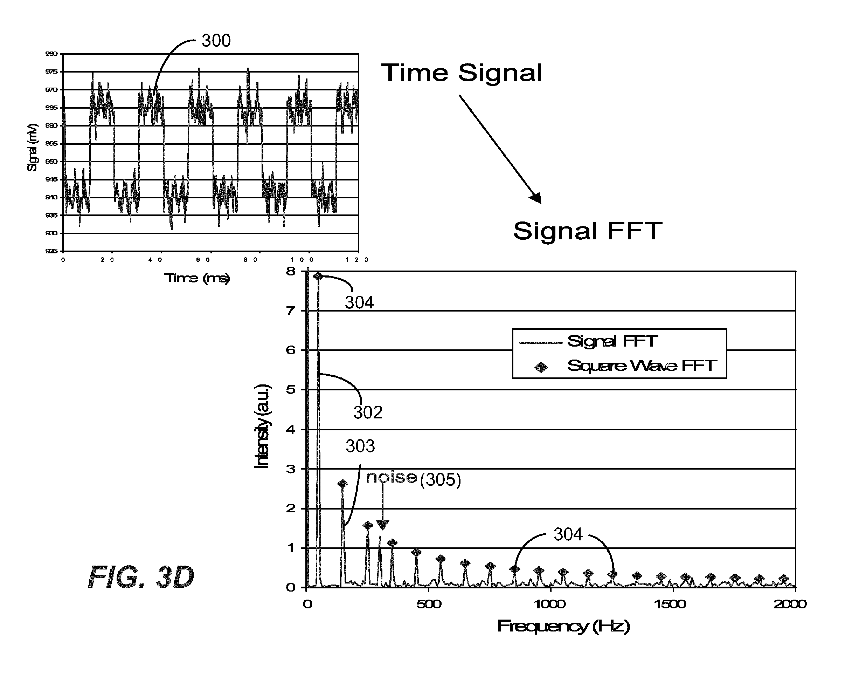

For example, FIG. 3D shows an amplified photodiode output for an incident 50 Hz square wave modulation from a 1550 nm source at 204 °C. Time domain signal 300 is converted into a frequency domain signal using a FFT algorithm. The fundamental frequency component 302 is, as expected, located at 50 Hz; the second component 303 located at three times the fundamental frequency-150 Hz; and so on. The magnitude of the fundamental frequency component 302 can be selected to represent the magnitude of response of the photodetector (150). Of course, the representative response of the photodetector (150) can also be a function of one or more frequency components.

The FFT analysis of the signal can be compared to the FFT analysis of an ideal square wave (shown by indicators 304) of 50 Hz in order to identify noise. Because there is a close match between the measured FFT analysis and the ideal FFT analysis, the exemplary signals of FIG. 3D seems to have good signal-to-noise ratio. Although it is evident that noise is present at various frequencies throughout the spectrum, the highest frequency component of noise appears to be at 300 Hz (See 305). The source of this noise component may be typical to the particular measurement device 30, and may vary.

Returning to FIG. 3C, once the magnitude of response of the photodiodes' outputs is determined in step 208, the response is used to determine the required variable of fluid sample (Step 210). The variable may include filtrate contamination, hydrocarbon composition (e.g., amount of methane, ethane, propane), the gas-to-oil ratio (GOR), or other suitable variable for a downhole fluid. This determination can use any number of techniques known in the art.

### C. Analysis of Photodiode Operation in Downhole Environment

As noted above, the photodetector 150 of Fig. 3B used in the NIR photodetectors 112A/122A of Fig. 3A can be composed of quaternary material. The disclosed photodiode die 160 can operate at high temperatures experienced downhole without requiring cooling. The following analysis characterizes the disclosed quaternary photodiode die 160 for high temperature operation. In other words, the best mode of operation of the disclosed quaternary photodiode die 160 at high temperature is determined. Additionally, responsivity curves of the disclosed quaternary photodiode die 160 with respect to temperature at various wavelengths of incident light and various frequencies of modulation of incident light are determined. Based on this characterization, it has been found that the disclosed quaternary photodiode die 160 can be successfully used in a harsh downhole environment despite a lack of cooling and even with the consequent high dark current associated with high temperature operation.

### 1. Test Setup

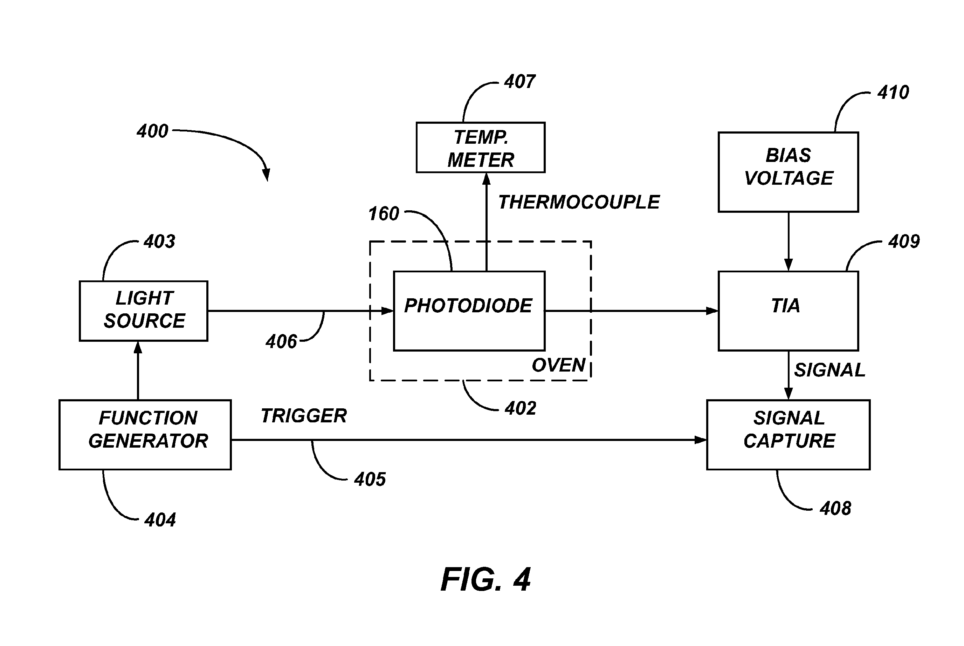

FIG. 4 shows a test setup 400 for analyzing and determining the high temperature properties of the disclosed quaternary photodetector 150 for use in a harsh downhole environment. Initially, the photodetector 150 is placed in an oven 402 so a light source 403 can image generated light to the photodetector 150 exposed to high temperatures. The oven 402 is capable of controlling the ambient temperature of photodetector 150 from 0°C to more than 210°C. The light source 403 can include sources of light that cover wavelengths from 250 to 2200-nm. As an example, light source 403 can include light sources of three different wavelengths: an 808-nm LED source, a 1550-nm LED source, and a 2200-nm LED source, or a broad-band tungsten-halogen white light source with wavelength selection provided by bandpass filtering.

Light generated by the light source 403 is fed to the photodetector 150 via a fiber optic cable 406. To mimic the sensing environment for the photodetector's response, a function generator 404 modulates the light source 403 so that the output of the light source 403 can have various waveform patterns, such as a square wave, a sine wave, etc. having varying duty cycles. For example, the function generator 404 can modulate the output of the light source 403 to have a square wave of modulation frequency range of 50 Hz to 1 kHz with 50% duty cycle. A temperature meter 407 measures the instant temperature of the photodetector 150 by way of a thermocouple.

For testing, output of the photodetector 150 is fed to a trans-impedance amplifier (TIA) 409, which is essentially a current to voltage converter. TIA 409 converts the output current of photodetector 150 into voltage, which is captured by a signal capturing device 408. The signal capturing device 408, which can be an oscilloscope, receives a trigger input signal from the function generator 404.

### 2. Wavelength Responsivity

The wavelength range of a quaternary material (AlGaAsSb) extends from approximately 800-nm though the NIR to approximately 2400-nm. As noted in the Background Section of the present disclosure, a quaternary photodiode composed of AlGaAsSb, such as a commercially available PD-24, typically has a long wavelength cutoff at approximately 2400-nm at room temperature. In other words, the responsivity of such a quaternary photodiode is negligible above 2400-nm. As evidenced by temperature testing, the responsivity of the disclosed quaternary photodiode die 160 composed of AlGaAsSb shifts toward longer wavelengths at higher temperatures, which is beneficial for downhole use. In fact, any changes in wavelength response at elevated temperature experienced by the quaternary material actually favors the near-infrared wavelengths because the temperature actually produces a red-shifting of the material's responsivity curve towards longer wavelengths.

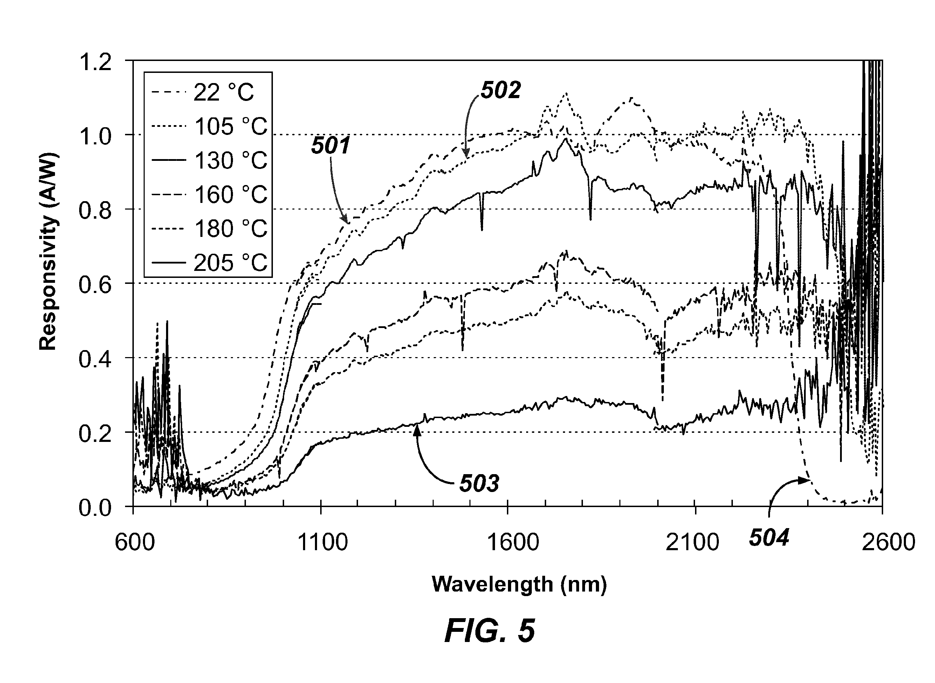

The test setup 400 of FIG. 4 was used to generate responsivity vs. wavelength for a number of temperatures above room temperature. For example, FIG. 5 shows the effect of temperature on the responsivity of the disclosed photodetector 150 for temperatures ranging from 22°C to 205°C. Responsivity for the 22°C curve 501 cuts off at approximately 2400-nm (504). However, as the temperature increases, the responsivity shifts right towards longer wavelengths. At temperature of 105°C, for example, curve 502 shows that the photodiode die 160 is responsive to wavelengths of 2500-nm.

As temperature is further increased, although the magnitude of responsivity reduces, the disclosed photodiode die 160 is responsive to even longer wavelengths, as evident, for example, from curve 503 corresponding to temperature of 205°C. Therefore, an increase in the operating temperature of the disclosed photodetector 150 under downhole conditions is advantageous at least because the responsivity of the disclosed photodetector 150 shifts towards longer wavelengths, allowing the measurement of downhole fluids at these longer wavelengths.

### 3. Photodiode Mode of Operation

As is known, photodiodes generate a current in response to incident light. This response can be measured in two different modes of operation-photovoltaic mode and photoconductive mode. In photovoltaic mode, the photodiode is operated in zero-bias condition, i.e., no external voltage source is connected to the diode terminals. In contrast, in photoconductive mode, the photodiode is biased by applying voltage to one of its terminals.

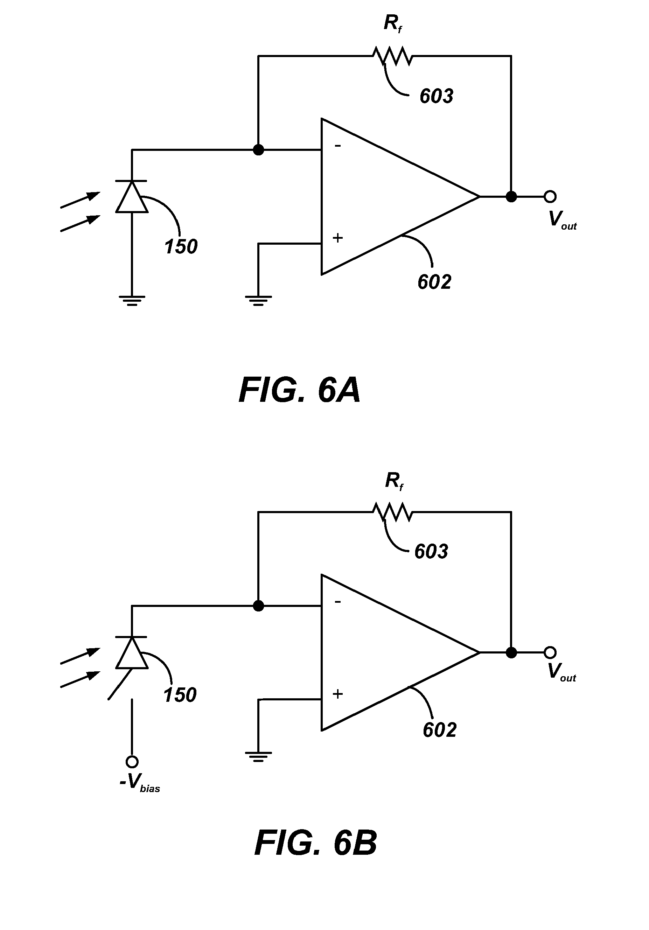

FIG. 6A shows an example where the disclosed photodetector 150 is connected in a photovoltaic mode. Opamp 602 with feedback resistor R_{f} 603 operates the trans-impedance amplifier TIA 409 of the test setup 400 (FIG. 4). Output voltage Vₒᵤₜ is equal to the product of the value of current I_{L} generated by photodiode 150 and the value of the feedback resistor R_{f} 603, i.e., Vₒᵤₜ = I_{L}R_{f}. Current I_{L} is the result of the reverse saturation current generated due to flow of additional minority carriers generated in the photodetector 150 due to the incident light. Typically, in photovoltaic mode shown in FIG. 6A, current I_{L} includes only a minimum amount of dark current I_{D}.

FIG. 6B shows an example where the disclosed photodetector 150 is connected in a photoconductive mode. In this case, a reverse bias voltage -V_{bias} is applied to the positive terminal of the photodetector 150. This reverse bias voltage has the effect of reducing the junction capacitance Cⱼ of photodetector 150. Reduced Cⱼ, in turn, improves the frequency response of photodetector 150. However, reverse biasing the photodetector 150 also increases the reverse saturation current, the dark current I_{D}.

Whether the photodetector 150 is operating in photovoltaic or photoconductive mode (FIGS. 6A-6B), increasing the photodiode's temperature causes increase in dark current I_{D}. This increase is generally due to increase in thermally excited electron-hole pairs, which is caused by a reduced shunt resistance across the diode junction. Increase in thermal current also results in a decrease in signal-to-noise ratio of the output Vₒᵤₜ of the TIA 409. This effect is further exacerbated in photoconductive mode (FIG. 6B), which due to a reverse bias across the lower shunt resistance results in the increase of dark current even further. For these reasons, determining the preferred mode of operation of the disclosed photodetector 150 at high temperatures can be important.

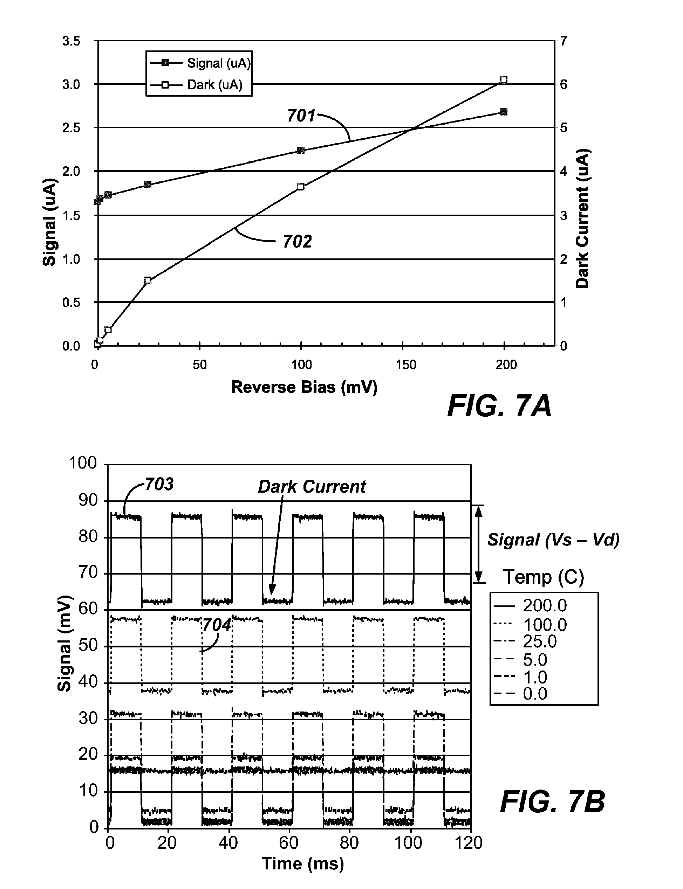

To do this, the effect of reverse bias voltage V_{bias} on the photodetector 150 operating at room temperature (27°C) is first analyzed. Examples of this are shown in FIGS. 7A and 7B. FIG. 7A shows the effect of increasing reverse bias voltage on the magnitude of dark current and signal current. For example, plot 702 shows an increase in dark current I_{D} with increasing reverse bias voltage. Plot 702 allows determining the shunt current Rₛₕ of photodetector 150 at room temperature, which shunt current is approximately 32 kΩ for reverse bias voltage above 50 mV. In the example of FIG. 7A, shunt resistance Rₛₕ is mostly constant for reverse bias voltages above 50 mV. Signal amplitude also increases with increase in bias voltage.

FIG. 7B shows signal amplitude for various reverse bias voltages (0 V to 200 mV) when the photodetector 150 is excited with a 50 Hz optical signal from a light source. Note that the y-axis shows the current in mV because the signal current was measured in terms of voltage generated across the resistor R_{f} 603 (FIGS. 6A-6B) having a value of 10 kΩ. Traces 703 and 704 represent signal amplitude for reverse bias of 200 mV and 100 mV respectively. The signal amplitude is measured with respect to the dark current generated when no incident light is present. This dark current is represented by the floor Vd of the square wave output 703. Signal amplitude Vs - Vd increases with increase in reverse bias voltage, which shows that the sensitivity of the photodetector 150 increases with increase in reverse bias voltage at room temperature.

Thus, at room temperature (27°C), despite increase in reverse bias voltage, signal amplitude can be successfully measured. Therefore, at room temperature, the photodetector 150 can be successfully operated in either photovoltaic mode or photoconductive mode. This is what is expected due to the operating range for the quaternary detector material.

### 4.Dark Current and Signal Amplitude

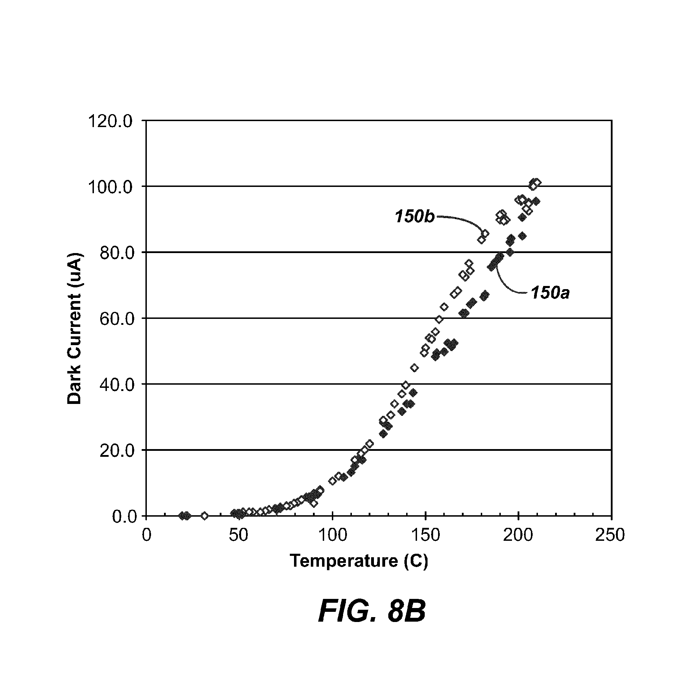

Because the quaternary detector with the disclosed photodetector 150 is to be used downhole without any cooling (or at least without significant cooling), further analysis of the photodiode's behavior at higher temperatures is needed. Accordingly, analysis of dark current and signal amplitude for high temperatures is discussed. FIGS. 8A and 8B show examples of the effect that increased temperature has on dark current I_{D} and shunt resistance Rₛₕ, respectively. For sake of reliability of measured data, data points were collected for two separate photodiode dies, indicated by 160a and 160b at reverse bias voltage of 1 mV. As shown in FIG. 8A, shunt resistance Rₛₕ decreases almost exponentially with the increase in temperature. For example, at 20°C, Rₛₕ is around 10 kΩ, but reduces to around 10 Ω at 200°C. This decrease in Rₛₕ results in an increase in the thermal component of the dark current I_{D}, which is evident in FIG. 8B. A low shunt resistance also results in the noise component of the dark current I_{D} to be amplified by the TIA 409 (FIG. 4). This injects noise into the output voltage Vₒᵤₜ, resulting in reduced signal-to-noise ratio.

Further, input voltage noise and offset on the op-amp 602 (FIG. 6A) are amplified by a noise gain factor of G_{N}=(1+R_{f}/Rₛₕ). When the shunt resistance Rₛₕ is of the order of (or larger than) R_{f}, then noise and offset gain are relatively small. However, when shunt resistance Rₛₕ becomes small relative to R_{f}, then noise terms can experience considerable gain. For example, with an R_{f} value of 10 kΩ and a high temperature shunt resistance Rₛₕ of 10 Ω, the noise gain G_{N} can be 1001.

Therefore, for the disclosed photodetector 150 to be able to operate at high temperatures such as 200°C, it is preferable that the photodetector 150 be operated with minimum, or zero, reverse bias voltage. This means that the photodetector 150 can be operated in photovoltaic mode for high temperature operation (> 200°C). This is in contrast to how the photodetector 150 can operate at lower temperatures in photoconductive mode, as noted previously.

### 5. Signal Amplitude and Responsivity

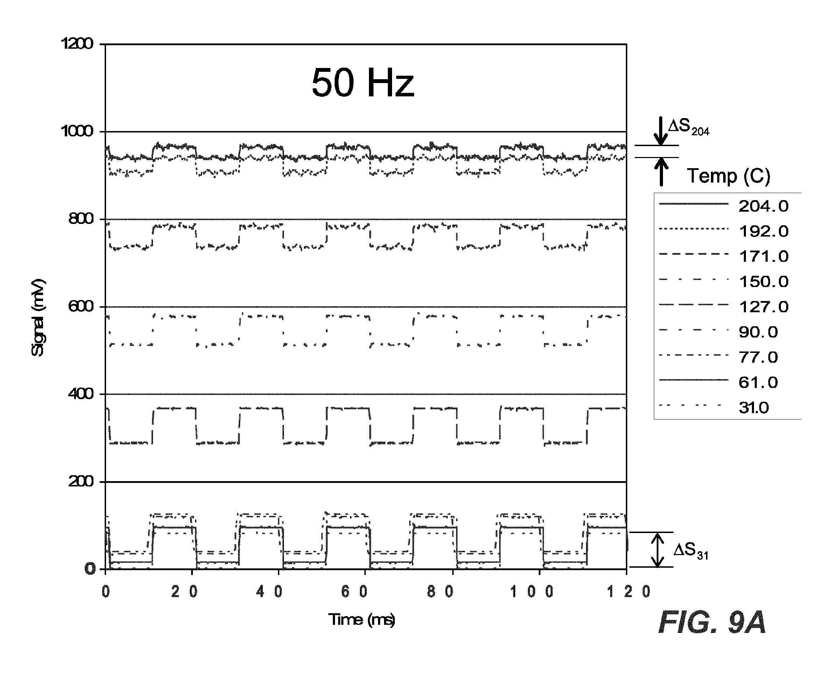

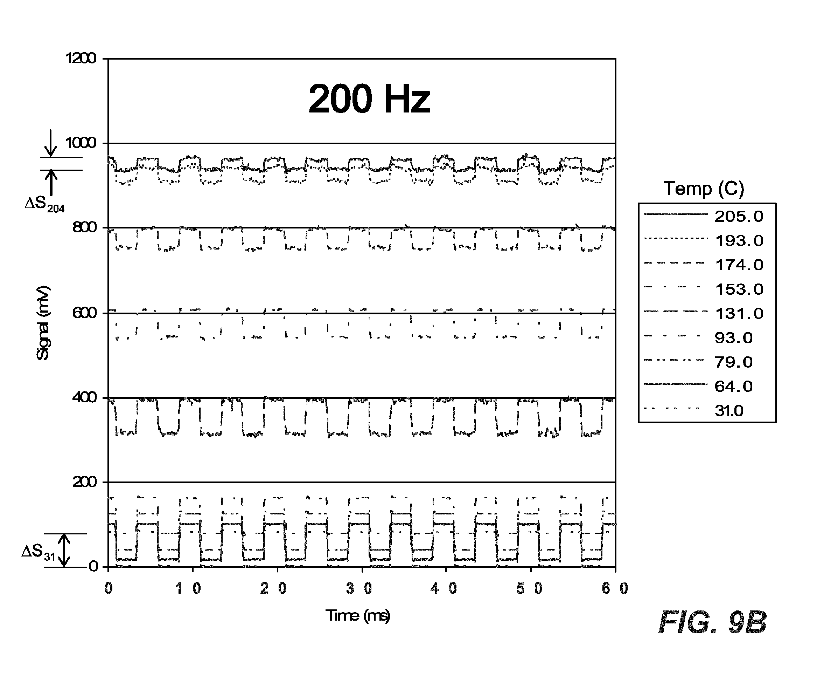

Discussion now turns to analyzing the effect of temperature on the signal amplitude and responsivity of the disclosed photodetector 150. FIGS. 9A and 9B show examples of the effect that increased temperature has on signal amplitude. In these examples, the incident light has a modulation frequency of 50-Hz and 200-Hz, respectively. In both cases, the reverse bias voltage was maintained at a small value of 1 mV. Signals were captured for temperatures ranging from 31 °C to 204°C.

In both cases, the signal amplitude decreases with the increase in temperature. This is evident from the smaller magnitude of ΔS₂₀₄, which is measured at 204°C, compared to the magnitude ΔS31, which is measured at 31°C. Moreover, signal noise also increases with increase in temperature. In short, the signal-to-noise ratio decreases with the increase in temperature. This means, as the temperature increases, discerning the signal from the noise becomes more difficult to perform.

As discussed previously, responsivity of a photodiode is the current magnitude generated for a given power and wavelength of incident light. The test setup 400 of FIG. 4 has been used to determine the relationship of the disclosed photodetector 150's responsivity with temperature, wavelength, and modulation frequency of incident light signal. For reliability, these variables are analyzed for two different quaternary photodetectors having the disclosed photodetector 150.

Magnitude of the current (represented in volts) generated by the photodetector 150 is measured in terms of the magnitude of the fundamental frequency of the spectrum of the signal spectrum. For example, FIG. 10 shows the photodetector 150 signal generated by an incident light having wavelength of 1550 nm and a modulation frequency of 50 Hz. This signal is processed using a Fast Fourier Transform (FFT) analysis to determine its frequency components. As shown, the magnitude of the fundamental frequency is selected to represent the magnitude of the signal. Alternatively, one can also select the energy of the signal over the first few frequency components (say the first three components of 50-Hz, 150-Hz, and 250-Hz) to represent the signal magnitude.

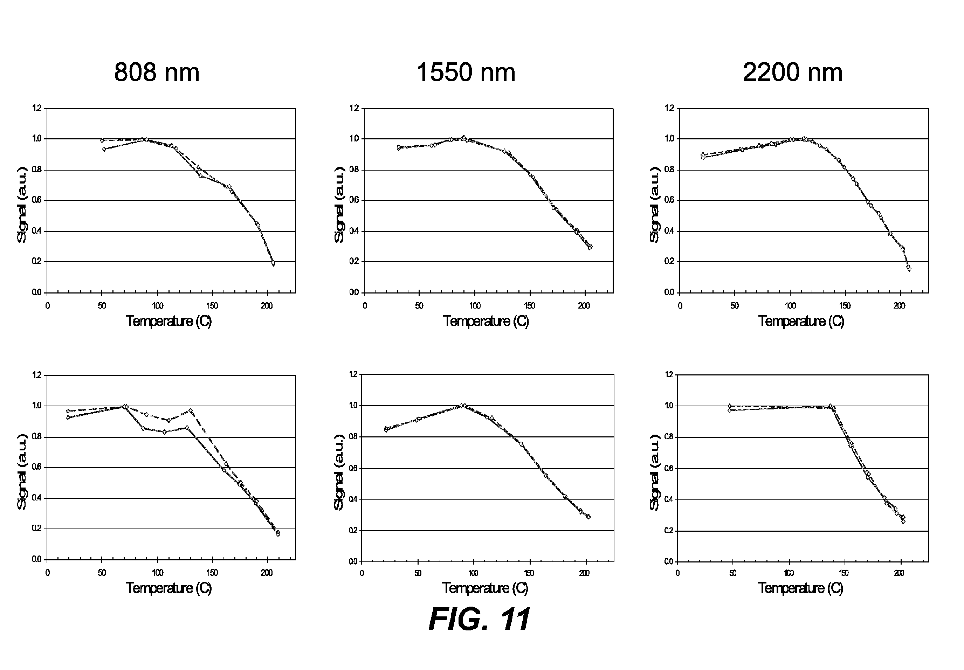

FIG. 11 shows various plots of responsivity of the disclosed photodetector 150. The plots on two rows represent plots for two different photodetectors, 150a and 150b. Each column represents a different wavelength of the incident light, 808-nm, 1550-nm, and 2200-nm. Additionally, each plot includes two traces for responsivity, one for modulation frequency of 50 Hz and another for a modulation frequency of 200-Hz. For each trace, responsivity is measured with respect to varying temperature in the range 0°C to 210°C. Also, the magnitude of the fundamental frequency at each point is shown normalized to the maximum measured fundamental frequency.

As evident from the plots in FIG. 11, the responsivity of the two photodetectors 150a-b drops considerably at high temperatures, such as 200°C. However, even at this temperature, the two photodetectors 150a-b generate a reasonable magnitude of measurable photocurrent. Change in modulation frequency does not appreciably change the responsivity traces. Furthermore, responsivity generally peaks at around 100°C.

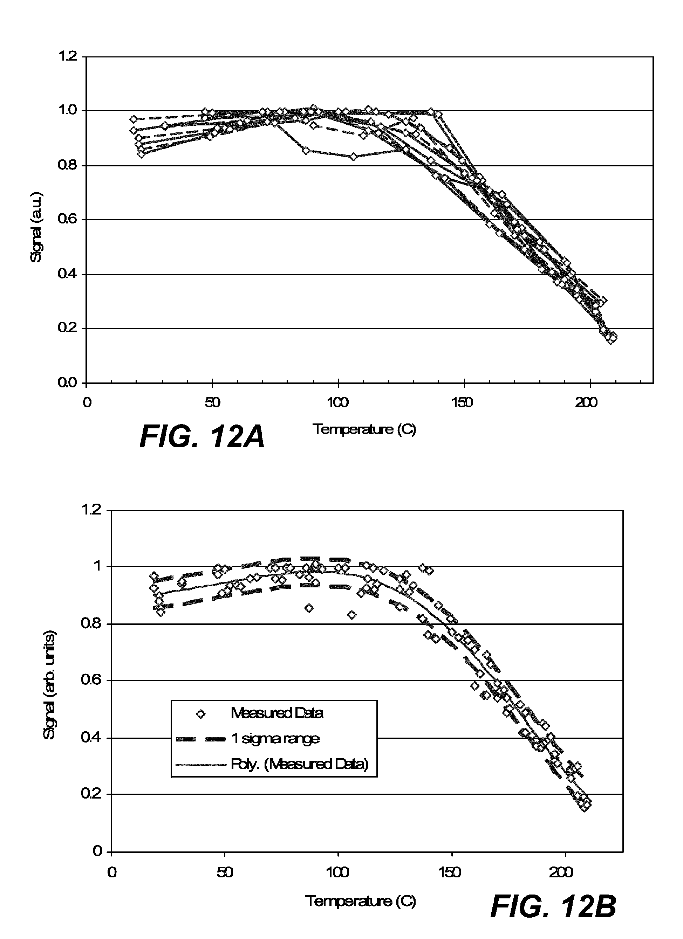

To determine the effect of each of the variables: temperature, wavelength, modulation frequency, and the device under test; each of the twelve traces are accumulated into a single two dimensional plot of signal responsivity vs. temperature, as shown in FIG. 12A. As can be seen, all of the traces are generally clustered closely together-indicating that the responsivity is mostly independent of wavelength, modulation frequency, and the device under test.

FIG. 12B shows a 1-sigma standard deviation boundary around a trace "Poly" obtained by a 5^{th} order polynomial curve fitting. As shown, most of the data points are within the 1-sigma boundary, further indicating that the responsivity is independent of wavelength, modulation frequency, and the device under test. As far as the dependence on temperature is concerned, maximum responsivity is obtained at around 100°C. Furthermore, responsivity at 200°C is approximately 0.3 times (30%) the responsivity at 100°C.

### 6. Temperature Stresses

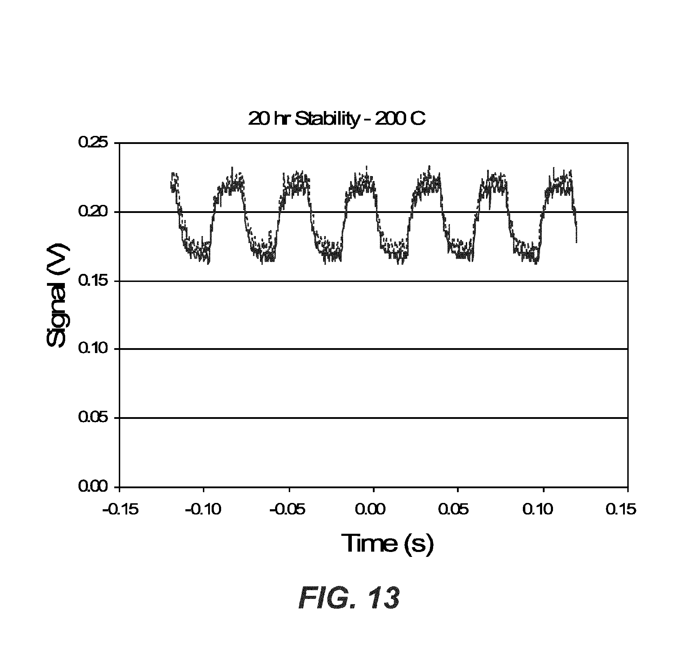

Changes in temperature can cause stresses in the photodetector 150. One way of determining the material stability of photodiode 150 is shown in FIG. 13, in which photodetector 150 is excited twice with incident light with the temperature at 200°C with a cooling period in between the two excitations. No degradation of signal is observed.

The foregoing description of preferred and other embodiments is not intended to limit or restrict the scope or applicability of the inventive concepts conceived of by the Applicants. In exchange for disclosing the inventive concepts contained herein, the Applicants desire all patent rights afforded by the appended claims. Therefore, it is intended that the appended claims include all modifications and alterations to the full extent that they come within the scope of the following claims or the equivalents thereof.

## Claims

1. A downhole fluid analysis tool, comprising:
a tool housing deployable downhole and having a flow passage for a fluid sample;
and
a fluid analysis device disposed in the tool housing relative to the flow passage and
exposed to a high operating temperature downhole, the fluid analysis device comprising:
a source outputting a spectral signal, and
a photodetector detecting near infra-red of the spectral signal, the photodetector having a quaternary material and having a standard operating temperature range below the high operating temperature,
wherein the photodetector is operable to detect the near infra-red of the
spectral signal in the high operating temperature without cooling to the standard operating temperature range.

2. The tool of claim 1, wherein the quaternary material comprises aluminum (Al), gallium (Ga), Arsenide (As), and Antimonide (Sb); and optionally wherein the photodetector comprises:
a first layer having the quaternary material;
a substrate composed of gallium (Ga) and Antimonide (Sb); and
an active layer disposed between the first layer and the substrate and composed of
gallium (Ga), Indium (In), Arsenide (As), and Antimonide (Sb).

3. The tool of claims 1 or 2, further comprising conversion circuitry coupled to the photodetector, the conversion circuitry configured to operate the photodetector in a photovoltaic mode or in a photoconductive mode.

4. The tool of any one of claims 1 to 3, further comprising a cooling apparatus disposed with the photodetector, the cooling apparatus cooling the photodetector by a predetermined temperature amount; and optionally wherein:
the predetermined temperature amount is at least 25-degrees Celsius; or
the cooling apparatus cools the photodetector only when a current operating
temperature is above a predetermined temperature threshold; or
the cooling apparatus comprises a thermo-electric cooler disposed with the
photodetector and coupled to a power source.

5. The tool of any one of claims 1 to 3, further comprising a cooling apparatus disposed with the photodetector, the cooling apparatus cooling the photodetector only when a current operating temperature is above a predetermined temperature threshold; and optionally wherein:
the predetermined temperature threshold is about 125-degrees Celsius; or
the cooling apparatus comprises a thermo-electric cooler disposed with the
photodetector and coupled to a power source.

6. The tool of any one of claims 1 to 5, wherein a lower limit of the high temperature operating range downhole is at least greater than or equal to about 80-degrees Celsius; and optionally wherein an upper limit of the standard operating range is at least less than or equal to about 50-degress Celsius.

7. The tool of any one of claims 1 to 6, wherein the photodetector detects the portion of the near infra-red spectral signal after interaction with a downhole fluid sample; or wherein the tool comprises a formation tester tool.

8. A downhole fluid analysis method, comprising:
deploying a tool in a high operating temperature downhole;
generating a spectral signal with a source of the tool; and
detecting near infra-red of the spectral signal with a photodetector in the tool, the
photodetector having a quaternary material and having a standard operating temperature range below the high operating temperature downhole;
wherein the photodetector is operable to detect the near infra-red spectral signal in
the high operating temperature without cooling to the standard operating temperature range.

9. The method of claim 8, further comprising converting the detected signal into a corresponding electrical signal by operating the photodetector in a photovoltaic mode or in a photoconductive mode.

10. The method of claims 8 or 9, further comprising converting the detected signal from a time domain to a frequency domain; and optionally further comprising measuring a magnitude of a fundamental component of the detected signal in the frequency domain, and using the measured magnitude to represent the detected signal.

11. The method of any one of claims 8 to 10, wherein the quaternary material comprises aluminum (Al), gallium (Ga), Arsenide (As), and Antimonide (Sb); and optionally wherein the photodetector comprises:
a first layer having the quaternary material;
a substrate having a second material composed of gallium (Ga) and Antimonide
(Sb); and
an active layer disposed between the first layer and the substrate and having a
third material composed of gallium (Ga), Indium (In), Arsenide (As), and Antimonide (Sb).

12. The method of any one of claims 8 to 11, further comprising cooling the photodetector by a predetermined temperature amount; and optionally wherein:
the predetermined temperature amount is at least 25-degrees Celsius; or
cooling the photodetector comprises cooling the photodetector only when a current
operating temperature is above a predetermined temperature threshold.

13. The method of any one of claims 8 to 11, further comprising cooling the photodetector only when a current operating temperature is above a predetermined temperature threshold; and optionally wherein the predetermined temperature threshold is about 125-degrees Celsius.

14. The method of any one of claims 8 to 13, wherein a lower limit of the high temperature operating range downhole is at least greater than or equal to 80-degrees Celsius; and optionally wherein an upper limit of the standard operating range is at least less than or equal to about 50-degress Celsius.

15. The method of any one of claims 8 to 14, wherein detecting the near infra-red spectral signal comprises detecting after interaction of the near infra-red spectral signals with a downhole fluid sample; or wherein the tool comprises a formation tester tool.
